Europäisches Patentamt

European Patent Office

Office européen des brevets

(19)

(11) Veröffentlichungsnummer: **0 082 492**
**B1**

(12) **EUROPÄISCHE PATENTSCHRIFT**

(45) Veröffentlichungstag der Patentschrift:
03.09.86

(21) Anmeldenummer: **82111694.4**

(22) Anmeldetag: **16.12.82**

(51) Int. Cl.⁴: **H 01 M 4/64,** H 01 M 10/39

(54) **Verfahren zur Herstellung einer elektrochemischen Speicherzelle sowie eine nach diesem Verfahren hergestellte Speicherzelle.**

(30) Priorität: **21.12.81 DE 3150702**

(43) Veröffentlichungstag der Anmeldung:
**29.06.83 Patentblatt 83/26**

(45) Bekanntmachung des Hinweises auf die Patenterteilung:
**03.09.86 Patentblatt 86/36**

(84) Benannte Vertragsstaaten:
**FR GB IT**

(56) Entgegenhaltungen:
**DE-A-2 945 013**
**FR-A-2 138 429**
**US-A-4 129 690**
**US-A-4 169 120**
**US-A-4 189 531**

(73) Patentinhaber: **BROWN, BOVERI & CIE Aktiengesellschaft, Kallstadter Strasse 1, D-6800 Mannheim 31 (DE)**

(72) Erfinder: **Mennicke, Stefan, Dr., Türkisweg 27, D-6909 Leimen- Gauangelloch (DE)**
Erfinder: **Reiss, Karl, Panoramastrasse 6, D-6906 Mühlheim- Rettigheim (DE)**

(74) Vertreter: **Kempe, Wolfgang, Dr., c/o Brown, Boveri & Cie AG Postfach 351, D-6800 Mannheim 1 (DE)**

## Beschreibung

Die Erfindung bezieht sich auf ein Verfahren zur Herstellung einer elektrochemischen Speicherzelle gemäß dem Oberbegriff des Patentanspruches 1 sowie auf eine nach diesem Verfahren hergestellte Speicherzelle.

Solche wiederaufladbaren elektrochemischen Speicherzellen mit Festelektrolyten eignen sich sehr gut zum Aufbau von Akkumulatoren hoher Energie- und Leistungsdichte. Die in den Alkali/Schwefel-Speicherzellen verwendeten Pestelektrolyten, die beispielsweise aus Beta-Aluminiumoxid gefertigt sind, zeichnen sich dadurch aus, daß die Teilleitfähigkeit des beweglichen Ions sehr hoch und die Teilleitfähigkeit der Elektronen um vielfache Zenerpotenzen kleiner ist. Durch die Verwendung solcher Festelektrolyten für den Aufbau von elektrochemischen Speicherzellen wird erreicht, daß praktisch keine Selbstentladung stattfindet, da die Elektronenleitfähigkeit vernachlässigbar ist und die Reaktionssubstanzen auch nicht als neutrale Teilchen durch den Festelektrolyten gelangen können. Ein Vorteil dieser elektrochemischen Speicherzellen auf der Basis von Natrium und Schwefel besteht darin, daß beim Laden keine elektrochemischen Nebenreaktionen auftreten. Der Grund dafür ist wiederum, daß nur eine Ionensorte durch den Festelektrolyten gelangen kann. Die Stromausbeute einer solchen Natrium-/-Schwefel-Speicherzelle liegt daher etwa bei 100%. Bei diesen elektrochemischen Speicherzellen ist das Verhältnis von Energieinhalt zum Gesamtgewicht einer solchen Speicherzelle im Vergleich zum Bleiakkumolator sehr hoch, da die Reaktionsstoffe leicht sind und bei der elektrochemischen Reaktion viel Energie frei wird. Elektrochemische Speicherzellen auf der Basis von Natrium und Schwefel besitzen also gegenüber konventionellen Akkumulatoren, wie den Bleiakkumulatoren, erhebliche Vorteile. Um ein einwandfreies Funktionieren derartiger Speicherzellen zu gewährleisten, muß die Kathode aus einem elektronenleitenden Matrix-Material aufgebaut sein, in dessen Forenstruktur die geschmolzenen aktiven Massen, Schwefel- und Natriumpolysulfid, aufgesaugt werden können. Der spezifische Widerstand des Matrix-Materials sollte nicht größer als 10 Ohm. cm sein, möglichst aber etwa 1 Ohm. cm betragen. Wegen der außerordentlichen Agressivität der kathodischen Schmelze haben sich bisher nur filzartige Matrix-Materialien auf der Basis von Kohlenstoff bewährt. Gemeinsam ist bei diesen Filzen der Aufbau aus Faserschichten, deren Fasern durch Vernadelung miteinander verbunden sind. Die Hauptfaserrichtungen in diesen Filzen verlaufen parallel zur Filzebene. Daraus ergibt sich, daß auch die elektrische Leitfähigkeit parallel zur Filzebene größer ist als senkrecht dazu. Bei der Herstellung von Schwefelelektroden für elektrochemische Speicherzellen muß deshalb darauf geachtet werden, daß für den Fall, daß der Filz mit seiner Oberfläche parallel zur Oberfläche des Festelektrolyten in den Kathodenraum eingebaut wird, eine relativ große Menge an Filz verwendet wird, um die gewünschte Leitfähigkeit quer zur Hauptfaserrichtung zur Erreichen. Dies hat zur Folge, daß der Filz vor dem Einbau in die Speicherzelle, insbesondere in den Kathodenraum, stark komprimiert werden muß. Dadurch kommt es zum Bruch einer großen Anzahl von Fasern. Dies wiederum führt zu einem Verlust der Elastizität des Filzes. Es besteht die Möglichkeit die Schwefelelelektrode entweder vorzufertigen und dann in den Kathodenraum einzubauen oder direkt innerhalb des Kathodenraumes herzustellen. Bei vorgefertigten Schwefelelelektroden wird der Kontakt zum kathodischen Stromabnehmer meist durch die elastische Ausdehnung des als Matrix-Materials verwendeten Filzes nach dem Schmelzen des Schwefels hergestellt. Wird für die Ausbildung der Schwefelelelektrode ein starres Matrix-Material verwendet, so stellt die Ausbildung des Kontakts zwischen dem Matrix-Material und dem Gehäuse einerseits und dem Festelektrolyten andererseits ein Problem dar, das noch nicht befriedigend gelöst ist.

Aus der US-PS 129 690 ist ein inverse elektrochemische Speicherzelle bekannt. Innerhalb ihres Kathodenraumes ist ein Filz aus Grafit angeordnet. In den Kathodenraum ragt ein Stromabnehmer, an dem der Filz über ein organgisches Harz, das zusätzlich verkokt ist, befestigt ist.

Aus der US-PS 41 69 120 ist eine elektrochemische Speicherzelle auf der Basis von Natrium und Schwefel bekannt. Der Kathodenraum dieser Speicherzelle ist mit Graphitfasern ausgefüllt, die sehr kurz geschnitten und mit einem Harz vermischt sind. Die aus den Graphitfasern und dem Harz gebildete Masse ist zusammengepreßt und mit einer vorgebbaren Dichte in den Kathodenraum eingefüllt. Zusätzlich ist die gesamt Kathodenfüllung verkokt und mit Schwefel getränkt.

Das hier verwendete Matrix-Material weist nicht die erforderliche Elastizität auf, so daß der gewünschte Kontakt zwischen dem Matrix-Material und dem Festelektrolyten einerseits sowie dem kathodischen Stromabnehmer andererseits nicht gegeben ist. Aufgrund dieses Nachteils weist die Speicherzelle nicht die erforderliche Leitfähigkeit auf, die für ein gutes Funktionieren der Speicherzelle erforderlich ist.

Der Erfindung liegt deshalb die Aufgabe zugrunde, ein Verfahren anzugeben, mit dem eine elektrochemische Speicherzelle hergestellt werden kann, deren Schwefelelektrode eine wesentlich höhere Leitfähigkeit aufweist als die Schwefelelelektroden der bisher bekannten Speicherzellen. Das Verfahren soll ferner eine kostengünstige Herstellung dieser Schwefelelelektroden ermöglichen.

Die Lösung erfolgt gemäß dem Kennzeichen des Patentanspruches 1.

Der in den Kathodenraum gefüllte Filz wird mit einem Phenolharz getränkt, das zuvor in Äthanol gelöst wird. Die Menge des verwendeten Lösungsmittels, insbesondere die Menge des Äthanols beträgt 50 bis 95 Gew.%. Die Gewichtsangabe bezieht sich auf das Gesamtgewicht des Lösungsmittels und des zu lösenden Duromers, insbesondere des Phenolharzes.

Erfindungsgemäß wird die größere Menge des Duromers im Bereich des kathodischen Stromabnehmers angeordnet. Bei zylindrischen Speicherzellen mit einem becherförmigen Festelektrolyten dienen die becherförmigen Metallgehäuse als kathodische Stromabnehmer, insbesondere in den Fällen, in denen der Kathodenraum zwischen den Festelektrolyten und den Gehäusen angeordnet ist. Bei diesen Speicherzellen kann die oben beschriebene Verteilung des Duromers innerhalb des Kathodenraums durch die Rotation der Speicherzellen um ihre Längsachsen erzielt werden. Wird eine solche Speicherzelle, in deren Kathodenraum sich ein mit Phenolharz getränkter Filz befindet, in eine solche Rotationsbewegung versetzt, so wird aufgrund der wirkenden Zentrifugalkraft das Duromer nach außen, insbesondere zu der Innenfläche des metallischen Gehäuses hintransportiert. Die kleinere Menge des Duromers verbleibt zwischen den Fasern des Filzes. Die Verteilung des Duromers erfolgt vorzugsweise während der Verdampfung des Lösungsmittels. Ist das Lösungsmittel, insbesondere das Äthanol vollständig verdampft und das Duromer in der gewünschten Weise innerhalb des Kathodenraums verteilt, wird dasselbe bei einer Temperatur zwischen 500 und 1500° C verkokt.

Eine nach dem erfindungsgemäßen Verfahren hergestellte elektrochemische Speicherzelle auf der Basis von Natrium und Schwefel ist dadurch gekennzeichnet, daß in den Kathodenraum wenigstens ein stark anisotroper Filz mit der Hauptfaserrichtung parallel zum Festelektrolyten eingelegt und mit wenigstens einem Duromer getränkt ist, und daß die Fasern des Filzes mit dem kathodischen Stromabnehmer und untereinander über das verkokte Duromer elektrisch leitend verbunden sind.

Das zur Tränkung des Filzes verwendete Phenolharz, wirkt wie ein Kleber und verbindet die Fasern des Filzes mit dem kathodischen Stromabnehmer. Bei dem Verkoken des Phenolharzes wird diese Verbindung nicht gelöst. Für die Verbindung der Filzfasern mit dem kathodischen Stromabnehmer wird der größte Anteil des Duromers verwendet. Die übrige Menge des Duromers verbleibt zwischen den Fasern des Filzes und verbindet diese miteinander. Auch hierbei geht durch die Verkokung des Phenolharzes die Verbindung zwischen den Fasern nicht verloren. Vielmehr wird das Duromer durch die Verkokung so umgewandelt, daß zwischen dem kathodischen Stromabnehmer und den Fasern des Filzes einerseits sowie zwischen den Fasern des Filzes selbst elektrisch leitende Pfade gebildet werden. über diese Pfade können die Elektronen in dem Reaktanden eingeleitet oder daraus weggeleitet werden. Bei der Entladung der Speicherzellen, z.B. werden die Elektronen vom kathodischen Stromabnehmer aus über die oben beschriebenen Leitpfade in den Reaktanden geführt. Dadurch werden die für die Entladung notwendigen chemischen Reaktionen innerhalb des Kathodenraums ermöglicht und eine optimale Entladung der Speicherzelle sichergestellt. In gleicher Weise wird auch die Aufladung der Speicherzelle durch die oben beschriebenen Maßnahmen erleichtert. Erfindungsgemäß wird in den Kathodenraum ein stark anisotroper Filz mit langen Fasern eingefüllt, der den Raum zwischen dem Festelektrolyten und dem kathodischen Stromabnehmer vollständig ausfällt. Diese Anisotropie ist sehr stark bei Kohlenstoff- und Graphitfilzen ausgeprägt, die aus verkokten Pechfasern bestehen. Bei diesen Filzen sind die Fasern weniger miteinander vernadelt. Der mit dem verkokten Duromer versteifte Filz weist neben einer verbesserten Leitfähigkeit auch die für seine Verwendungszwecke erforderliche Elastizität auf. Aufgrund dieser Eigenschaft ist es möglich, daß auch Festelektrolyte mit merklichen geometrischen Abweichungen von der idealen Rohrform so in das becherförmige Gehäuse eingesetzt werden können, daß sie allseitig dicht von dem Filz, insbesondere seinen Fasern umgeben werden. Dadurch wird die Bildung von Hohlräumen innerhalb des Kathodenraumes, in denen es zu makroskopischer Phasentrennung kommen kann, verhindert und damit das Langzeitverhalten der Speicherzelle verbessert.

Durch die oben beschriebenen Maßnahmen kann eine kostengünstige Schwefelelektrode für eine Natrium/Schwefel-Speicherzelle hergestellt werden. Der für die Ausbildung der Schwefelelektrode verwendete anisotrope Filz ist wesentlich billiger, als die bisher benutzten stark vernadelten filzartigen Matrix-Materialien. Durch das Tränken des Filzes mit dem Duromer wird die Elastizität derselben so verändert, insbesondere so weit verbessert, daß sie mit der Elastizität der bisher verwendeten Filze vergleichbar ist.

Die Erfindung wird nachfolgend anhand einer Zeichnung erläutert.

In der Figur ist eine elektrochemische Speicherzelle im Vertikalschnitt dargestellt. Die elektrochemische Speicherzelle auf der Basis von Natrium und Schwefel weist ein metallisches Gehäuse 2 auf, das becherförmig ausgebildet ist. Im Inneren dieses becherförmigen Gehäuses 2 ist ein ebenfalls becherförmig ausgebildeter Festelektrolyt 3 angeordnet. Der Festelektrolyt 3 ist aus Beta-Aluminium gefertigt. Seine Abmessungen sind so gewählt, daß zwischen den inneren Begrenzungsflächen des metallischen Gehäuses 2 und seinen äußeren Begrenzungsflächen ein zusammenhängender Zwischenraum 4 gebildet wird. Dieser Zwischenraum 4 dient bei dem hier dargestellten Ausführungsbeispiel als Kathodenraum. Das Innere des Festelektrolyten 3 wird als Anodenraum 5 benutzt. Das metallische Gehäuse 2 ist an seinem offenen Ende mit einem nach innen weisenden Flansch 6 versehen, auf den der nach außen weisende Flansch 7 des Festelektrolyten aufgesetzt ist. Der Flansch 7 des Festelektrolyten 3 wird durch einen Isolierring gebildet, der aus Alpha-Aluminiumoxid gefertigt ist. Die Verbindung zwischen dem Festelektrolyten 3 und dem Isolierring erfolgt über ein Glaslot (hier nicht dargestellt). Der Isolierring ist so ausgebildet, daß er über den Festelektrolyten 3 nach außen übersteht und gleichzeitig die Funktion des Flansches 7 übernimmt. Zwischen dem Flansch 6 des Gehäuses 2 und dem Flansch 7 des Festelektrolyten 3 wird vorzugsweise eine Dichtung (hier nicht dargestellt) angeordnet. Durch den nach innen weisenden Flansch 6 des metallischen Gehäuses 2 und den nach außen weisenden Flansch 7 des Festelektrolyten 3 wird der zwischen dem Gehäuse 2 und dem Festelektrolyten 3 liegende Kathodenraum gegen den Anodenraum 5 und nach außen hin vollständig verschlossen. Der Verschluß des Anodenraums 5 erfolgt durch die eine Platte 8, die auf den Flansch 7 des Festelektrolyten 3 aufgelegt ist. Zwischen dem Flansch 7 und der Platte 8 wird zusätzlich eine Dichtung (hier nicht dargestellt) angeordnet. Der anodische Stromabnehmer 9 ist durch einen Metallstab gebildet, der weit in den Festelektrolyten 3 hineinragt und einige mm über die Deckplatte 8 übersteht. Die Deckplatte 8 ist für den Durchlaß des anodischen Stromabnehmers 9 in der Mitte mit einer Durchführung versehen. Der anodische Stromabnehmer 9 ist im Bereich dieser Durchführung 10 unter Zwischenfügung einer Isolierung 19 mit der Deckplatte 8 verbunden.

Wie bereits oben erwähnt, dient der zwischen dem metallischen Gehäuse 2 und dem Festelektrolyten 3 liegende Zwischenraum 4 als Kathodenraum. Dieser enthält die erfindungsgemäße Schwefelelektrode. Für die Herstellung dieser Schwefelelektrode wird vor dem Einsatz des Festelektrolyten 3 in die Speicherzelle 1 und dem endgültigen Verschließen derselben durch die Deckplatte 8 ein Filz 11 eingesetzt. Bei diesem Filz handelt es sich um einen Kohlenstoffilz oder einen Graphitfilz. Beide sind aus verkokten Pechfasern hergestellt. Die Herstellung dieses Filzes gehört bereits zum Stand der Technik und soll hier nicht näher erläutert werden. Vorzugsweise wird der Filz 11 so in den Kathodenraum eingesetzt, daß seine Hauptfaserrichtung parallel zur Längsachse der Speicherzelle verläuft. Die Menge des verwendeten Filzes 11 wird so bemessen, daß der Kathodenraum 4, insbesondere der Raum zwischen dem metallischen Gehäuse und dem Festelektrolyten vollständig ausgefüllt ist. Nach dem Anordnen des Filzes innerhalb des Kathodenraumes 4 wird dieser mit einem Duromer 12 getränkt. Dieses Duromer ist in Äthanol gelöst. Vorzugsweise beträgt die verwendete Menge an Äthanol 50 bis 95 Gew.%. Die angegebene Gewichtsmenge bezieht sich auf das Gesamtgewicht des zu lösenden Duromers und des verwendeten Lösungsmittels. Bei dem hier beschriebenen Ausführungsbeispiel wird der Filz 11 insbesondere mit Phenolharz getränkt, das in Äthanol gelöst ist. Nach dem Tränken des Filzes 11 mit dem Phenolharz wird dieses innerhalb des Kathodenraums so verteilt, daß sich die größere Menge des Phenolharzes anschließen im Bereich des metallischen Gehäuses 2 befindet. Bei der hier beschriebenen Ausführungsform dient das metallische Gehäuse 2 als kathodischer Stromabnehmer 4A. Diese Verteilung des Duromers 12 innerhalb des Kathodenraums wird dadurch erreicht, daß die Speicherzelle 1 in eine Rotationsbewegung versetzt wird. Als Rotationsachse dient die Längsachse der Speicherzelle 1. Während der Rotation der Speicherzelle 1 wird zusätzlich das Lösungsmittel des Duromers, insbesondere das Äthanol verdampft. Ist die gewünschte Verteilung des Duromers innerhalb des Kathodenraums 4 erreicht, d.h. befindet sich die größere Menge des Duromers zwischen dem Filz, der direkt an das metallische Gehäuse 2 angrenzt, so wird dieser Verfahrensschritt beendet. Durch die Anordnung des Duromers im Bereich des Gehäuses wird sichergestellt, daß die Fasern des Filzes 11 für das Duromer 12 gut mit dem Gehäuse 2 verklebt sind. Im Anschluß daran wird das Duromer verkokt. Die Verkokung des Duromers erfolgt bei einer Temperatur zwischen 500 und 1500°C. Bei dieser Verkokung wird ein Stoff geschaffen, der graphitähnliche Eigenschaften hat. Je höher die Verkokungstemperatur liegt, um so besser ist die graphitähnliche Eigenschaft dieses Stoffes. Nach dem Verkoken des Duromers 12 wird der Filz 11 mit Schwefel getränkt. Die gewünschte Schwefelmenge wird durch ein Schleudergußverfahren in den Kathodenraum 4 eingebracht. Nach dem Erkalten des Filzes 11 kann der mit Natrium gefüllte Festelektrolyt 3 in das Innere des metallischen Gehäuses 2 eingesetzt werden. Der im Kathodenraum 4 angeordnete Filz ist so elastisch, daß seine Fasern sich eng an den Festelektrolyten 3 anlegen und diesen fest umschließen, so daß kein Spalt zwischen dem Filz 11 und dem Festelektrolyten entsteht. Beim Einsetzen des Festelektrolyten 3 in das metallische Gehäuse ist der Innenraum des Festelektrolyten 3, der den Anodenraum 5 bildet, bereits mit Natrium ausgefüllt und durch die Deckplatte 8 fest verschlossen. Der anodische Stromabnehmer 9 ist ebenfalls, in der oben beschriebenen Art und Weise installiert. Nach dem Einsetzen des Festelektrolyten 3 wird dessen Flansch 7 noch mit dem Flansch 6 des metallischen Gehäuses 2 fest verbunden. Damit ist die Herstellung der Speicherzelle abgeschlossen. Sie kann jetzt in Betrieb genommen werden.

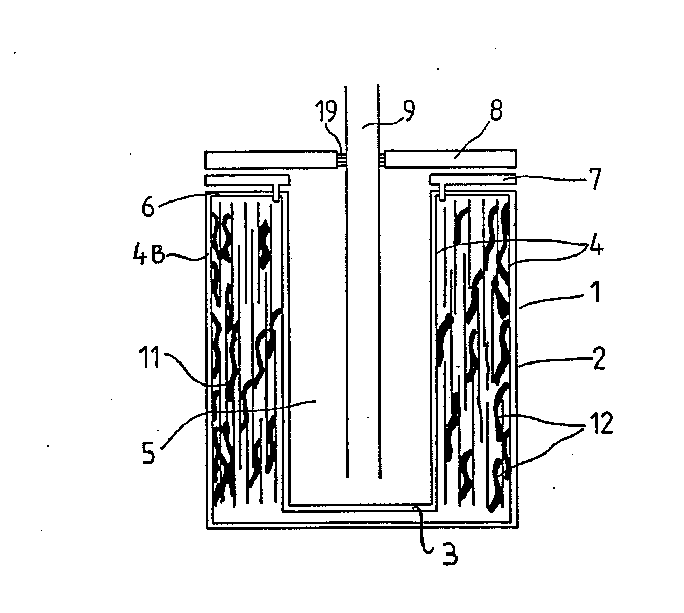

Die Erfindung bezieht sich nicht nur auf das in der Fig. 1 dargestellte und in der dazugehörigen Beschreibung erläuterte Ausführungsbeispiel, vielmehr umfaßt die Erfindung auch Speicherzellen, die mit mehreren Anoden- und mehreren Kathodenräumen ausgerüstet sind.

Bei diesen Speicherzellen enthält jeder Kathodenraum einen anisotropen Filz 11, der mit einem Duromer 12 getränkt ist. Über das verkokte Duromer sind die Fasern des Filzes mit dem jeweiligen kathodischen Stromabnehmer 4B und untereinander elektrisch leitend verbunden.

**Patentansprüche**

1. Verfahren zur Herstellung einer elektrochemischen Speicherzelle (1) auf der Basis von Natrium und Schwefel, mit mindestens einem Anodenraum (5) und einem Kathodenraum (4) sowie einem die beiden trennenden alkaliionenleitenden Festelektrolyten (3), wobei im Kathodenraum (4) ein elektronenleitender Filz (11) angeordnet und über ein verkoktes Harz am kathodischen Stromabnehmer (4B), befestigt wird, dadurch gekennzeichnet, daß in den ·Kathodenraum (4) wenigstens ein stark anisotroper Filz (11) mit der Hauptfaserrichtung parallel zum Festelektrolyten (3) eingelegt und mit mindestens einem gelösten Duromer (12) getränkt wird, und daß daraufhin die größere Menge des Duromers (12) im Bereich des kathodischen Stromabnehmers (4B) angesammelt und das gesamte Duromer (12) anschließend verkokt wird.

2. Verfahren nach Anspruch 1, dadurch gekennzeichnet, daß der Filz (11) nach dem Einfüllen in den Kathodenraum (4) mit einem in Äthanol gelösten Phenolharz getränkt wird.

3. Verfahren nach Anspruch 1 oder 2, dadurch gekennzeichnet, daß für die Lösung des Duromers (12) 50 bis 95 Gew.% Äthanol bezogen auf das Gesamtgewicht des Lösungsmittels und des Duromers (12) verwendet werden.

4. Verfahren nach Anspruch 1 bis 3, dadurch gekennzeichnet, daß das Duromer (12) bei einer Speicherzelle (1) mit einem becherförmigen Festelektrolyten (3) und einem ebensolchen metallischen Gehäuse (2) durch Rotation der Speicherzelle (1) um ihre Längsachse im Bereich des kathodischen Stromabnehmers (4B) angesammelt wird.

5. Verfahren nach Anspruch 1 bis 4, dadurch gekennzeichnet, daß das Äthanol während der Rotation der Speicherzelle (1) verdampft wird.

6. Verfahren nach Anspruch 1 bis 5, dadurch gekennzeichnet, daß die Verkokung des Duromers (12) bei einer Temperatur zwischen 500 und 1500°C durchgeführt wird.

7. Elektrochemische Speicherzelle (1) auf der Basis von Natrium und Schwefel mit mindestens einem Anodenraum (5) und einem Kathodenraum (4), die durch einen alkaliionenleitenden Festelektrolyten (3) getrennt und mindestens bereichsweise von einem korrosionsgeschützten metallischen Gehäuse (2) umgeben sind, wobei im Kathodenraum (4) ein elektronenleitender Filz (11) angeordnet und über ein verkoktes Harz am kathodischen Stromabnehmer (4B) befestigt ist, dadurch gekennzeichnet, daß in den Kathodenraum (4) wenigstens ein stark anisotroper Filz (11) mit der Hauptfaserrichtung parallel zum Festelektrolyten (3) eingelegt und mit mindestens einem Duromer (12) getränkt ist, und daß die Fasern des Filzes (11) mit dem kathodischen Stromabnehmer (9) und untereinander über das verkokte Duromer (12) elektrisch leitend verbunden sind.

8. Elektrochemische Speicherzelle nach Anspruch 7, dadurch gekennzeichnet, daß das Duromer (12) ein Phenolharz ist.

9. Elektrochemische Speicherzelle nach Anspruch 7 oder 8, dadurch gekennzeichnet, daß in den Kathodenraum (4) ein stark anisotroper Filz (11) mit langen Fasern eingefüllt ist, der den Raum zwischen dem Festelektrolyten (3) und dem kathodischen Stromabnehmer (9) vollständig ausfüllt.

10. Elektrochemische Speicherzelle nach Anspruch 7 bis 9, dadurch gekennzeichnet, daß in den Kathodenraum (4) ein aus verkokten Pechfasern hergestellter Kohlenstoffilz eingefüllt ist.

11. Elektrochemische Speicherzelle nach Anspruch 7 bis 9, dadurch gekennzeichnet, daß in den Kathodenraum (4) ein aus verkokten Pechfasern hergestellter Graphitfilz eingefüllt ist.

**Claims**

1. Process for the manufacture of an electrochemical storage cell (1) based on sodium and sulphur, having at least one anode space (5) and one cathode space (4) and an alkali metal ion-conducting solid electrolyte (3) separating the two spaces, an electron-conducting felt (11) being arranged in the cathode space (4) and being fixed to the cathodic current collector (4B) via a carbonised resin, characterised in that at least one highly anisotropic felt (11) is inserted, with the main fibre direction parallel to the solid electrolyte (3), into the cathode space (4) and is impregnated with at least one dissolved thermosetting resin (12), and that then the major quantity of the thermosetting resin (12) is accumulated in the region of the cathodic current collector (4B) and the entire thermosetting resin (12) is then carbonised.

2. Process according to Claim 1, characterised in that the felt (11) after insertion into the cathode space (4), is impregnated with a phenolic resin dissolved in ethanol.

3. Process according to Claim 1 or 2, characterised in that 50 to 95% by weight of ethanol, relative to the total weight of the solvent and the thermosetting resin (12), is used for dissolving the thermosetting resin (12).

4. Process according to Claims 1 to 3, characterised in that, in a storage cell (1) with a can-shaped solid electrolyte (3) and a like metallic housing (2), the thermosetting resin (12) is accumulated in the region of the cathodic current collector (4B) by rotating the storage cell (1) about its longitudinal axis.

5. Process according to Claims 1 to 4, characterised in that the ethanol is vaporised during the rotation of the storage cell (1).

6. Process according to Claims 1 to 5, characterised in that the carbonisation of the thermosetting resin (12) is carried out at a temperature between 500 and 1500° C

7. Electrochemical storage cell (1) based on sodium and sulphur, having at least one anode space (5) and one cathode space (4), which are separated by an alkali metal ion-conducting solid electrolyte (3) and are at least sectionally surrounded by a corrosion-protected metallic housing (2), an electron-conducting felt (11) being arranged in the cathode space (4) and being fixed to the cathodic current collector (4B) via a carbonised resin, characterised in that at least one highly anisotropic felt (11) is inserted, with the main fibre direction parallel to the solid electrolyte (3), into the cathode space (4) and is impregnated with at least one thermosetting resin (12), and that the fibres of the felt (11) are electrically conductively connected to the cathodic current collector (9) and to one another via the carbonised thermosetting resin (12).

8. Electrochemical storage cell according to Claim 7, characterised in that the thermosetting resin (12) is a phenolic resin.

9. Electrochemical storage cell according to Claim 7 or 8, characterised in that the cathode space (4) is filled with a highly anisotropic felt (11) with long fibres, which completely fills the space between the solid electrolyte (3) and the cathodic current collector (9).

10. Electrochemical storage cell according to Claims 7 to 9, characterised in that the cathode space (4) is filled with a carbon felt produced from carbonised pitch fibres.

11. Electrochemical storage cell according to Claims 7 to 9, characterised in that the cathode space (4) is filled with a graphite felt produced from carbonised pitch fibres.

**Revendications**

1. Procédé de réalisation d'un élément d'accumulateur électrochimique (1) à base de sodium et de soufre, avec au moins une chambre d'anode (5) et une chambre de cathode (4) ainsi qu'un électrolyte solide (3) conducteur d'ions alcalins séparant ces deux chambres, un feutre (11) conducteur d'électrons étant disposé dans la chambre de cathode (4) et fixé au collecteur de courant cathodique (4B) par une résine cokéfiée, caractérisé par le fait que l'on insère dans la chambre de cathode (4) au moins un feutre (11) fortement anisotrope avec direction principale de ses fibres parallèle à l'électrolyte solide et on l'imprègne d'au moins un thermodurcissable (12) dissous, après quoi l'on amasse la majeure partie dudit thermodurcissable (12) dans la zone du collecteur de courant cathodique (4B), puis on cokéfie la totalité de ce même thermodurcissable (12).

2. Procédé selon la revendication 1 caractérisé par le fait qu' après son insertion dans la chambre de cathode (4), on imprègne le feutre (11) d'une résine phénolique dissoute dans de l'éthanol.

3. Procédé selon la revendication 1 ou 2 caractérisé par le fait qu'on utilise pour la dissolution du thermodurcissable (12) 50 à 95 % en poids d'éthanol rapportés au poids total du solvant et du thermodurcissable (12).

4. Procédé selon les revendications 1 à 3 caractérisé par le fait que dans le cas d'un élément d'accumulateur (1) comportant un électrolyte solide (3) en forme de godet et un boîtier métallique (2) de même forme, on amasse le thermodurcissable (12) dans la zone du collecteur de courant cathodique (4B) par rotation dudit élément d'accumulateur (1) autour de son axe longitudinal.

5. Procédé selon les revendications 1 à 4, caractérisé par le fait qu'on vaporise l'éthanol pendant la rotation de l'élément d'accumulateur (1).

6. Procédé selon les revendications 1 à 5 caractérisé par le fait qu'on effectue la cokéfaction du thermodurcissable (12) à une température comprise entre 500 et 1500°C.

7. Elément d'accumulateur électrochimique (1) à base de sodium et de soufre avec au moins une chambre d'anode (5) et une chambre de cathode (4) qui sont séparées par un électrolyte solide (3) conducteur d'ions alcalins et entourées au moins par zones d'un boîtier métallique (2) protégé contre la corrosion, un feutre (11) conducteur d'électrons étant disposé dans la chambre de cathode (4) et fixe au collecteur de courant cathodique (4B) par une résine cokéfiée, caractérisé par le fait qu'au moins un feutre (11) fortement anisotrope est inséré dans la chambre de cathode (4) avec direction principale de ses fibres parallèle à l'électrolyte solide (3) et est imprégné d'au moins un thermodurcissable (12) et que les fibres du feutre (11) sont reliées en conduction électrique au collecteur de courant cathodique (9), et entre elles, par le thermodurcissable (12) cokéfié.

8. Elément d'accumulateur électrochimique selon la revendication 7 caractérisé par le fait que le thermodurcissable (12) est une résine phénolique.

9. Elément d'accumulateur électrochimique selon la revendication 7 ou 8 caractérisé par le fait que dans la chambre de cathode (1) est inséré un feutre fortement anisotrope (11) à longues fibres qui remplit complètement l'espace compris entre l'électrolyte solide (3) et le collecteur de courant cathodique (9).

10. Elément d'accumulateur électrochimique selon les revendications 7 à 9 caractérisé par le fait que dans la chambre de cathode (4) est inséré un feutre de carbone réalisé à partir de fibres de brai cokéfiées.

11. Elément d'accumulateur électrochimique selon les revendications 7 à 9 caractérisé par le fait que dans la chambre de cathode (4) est inséré un feutre de graphite réalisé à partir de fibres de brai cokéfiées.